# EUROPEAN PATENT APPLICATION

(11) **EP 4 067 822 A1**
(43) Date of publication of application: **05.10.2022**
(21) Application number: 22162327.5
(22) Date of filing: 15.03.2022
(51) Int. Cl.: G01C 21/20, G01C 13/00

(54) **AUTOMATIC NAVIGATION OF A MARINE ENVIRONMENT AREA**

(30) Priority: 31.03.2021 US 202117218492
(71) Applicant: Navico Holding AS, 4373 Egersund (NO)
(72) Inventor: HUNT, Matthew David, Shorewood, WI 53211 (US)
(74) Representative: Hewett, Jonathan Michael Richard

(57) **Abstract**

Systems and methods for automatic navigation of a marine environment area are detailed herein. A system for navigating a marine area includes a display, a processor, and a memory including a computer program code. The computer program code, when executed, causes, on the display, presentation of a chart including at least a portion of a body of water; receives an input of at least one condition parameter associated with the desired marine environment; determines a portion of the body of water defined by the at least one condition; and displays the determined portion on the chart. The computer program code further, when executed, determines a traversal coverage corresponding to a watercraft; and determines a route to traverse the determined portion based on the traversal coverage of the watercraft such that an entirety of the determined portion is covered by the determined traversal coverage of the watercraft during the route.

## Description

### FIELD OF THE INVENTION

Embodiments of the present invention relate generally to navigating a marine environment, and more particularly, to providing for navigation of a marine environment that satisfies specific conditions of interest.

### BACKGROUND OF THE INVENTION

Navigational systems, such as marine navigational systems, may provide a display of a navigational chart or map. Nautical navigation charts including electronic or interactive nautical charts are typically used to provide a user with information about a body of water including (but not limited to) depth, routes, water temperatures, or the like. Some nautical charts may also provide an indication of the current location of a watercraft (e.g., vessel) associated with the display device. Further, some electronic nautical charts may also display the location, course, speed and/or other information for one or more other watercrafts on the body of water. Routes may be displayed in association with the navigational chart and may be followed by manual maneuvering of the watercraft or by an autopilot system.

### BRIEF SUMMARY OF THE INVENTION

As noted above, navigational systems are capable of collecting, compiling, and storing various data about marine navigation and marine events. Anglers and boaters may know conditions of the marine environment they are looking for (e.g., temperature of the water or depths), but the marine environment may not be easily ascertainable by looking through all the data.

Embodiments of the present invention enable determination of a portion of a body of water defined by condition parameters input by a user. In some cases, however, the marine environment defined by the desired condition parameters may be an arbitrary shape which may be difficult to navigate effectively and/or efficiently. As such, embodiments of the present invention create navigation routes to traverse the determined portion of the body of water (e.g., the desired marine environment). The navigation routes may be based on a traversal coverage, which may be determined by the user or determined by characteristics of the watercraft, including a width of the watercraft, a determined fishing cast distance, a width of a towed fishing line, or based on a sonar beam footprint. Accordingly, a marine data system (e.g., utilizing the navigational system) may calculate a route to automatically navigate the desired marine environment, such as without prompting the user to create or accept a particular search pattern.

In some embodiments, the marine data system may take into account and/or determine desired speeds of the watercraft, turn capabilities, and/or additional user inputs to determine the navigation route. In some embodiments, the marine data system may suggest or highlight condition parameters to increase or decrease the desired marine environment to be navigated. In some embodiments, the system may suggest navigating outside of the marine environment for efficiency of the route.

Using a traversal coverage provides the marine data system with a metric to determine a route based on the navigable area to effectively cover the entire determined portion of the marine environment, such that although the watercraft may not directly pass along the entirety of the marine environment, the determined portion is effectively covered by the conditions and characteristics (e.g., various sensors, sonars, etc.) of the watercraft.

In an example embodiment, a marine data system is provided including a display, a processor, and a memory including a computer program code. The computer program code is configured to, when executed by the processor, cause, on the display, presentation of a chart including at least a portion of a body of water. The computer program code is further configured to receive user input indicating at least one condition parameter associated with a desired marine environment within the body of water. The computer program code is further configured to determine a portion of the body of water that is defined by the at least one condition parameter and cause, on the display, presentation of an indication of the determined portion of the body of water on the chart. The presentation of the indication of the determined portion includes highlighting a portion of the body of water on the chart representing the determined portion. The computer program code is further configured to determine a traversal coverage corresponding to the watercraft, and determine a route, based on the determined traversal coverage, to traverse the determined portion such that an entirety of the determined portion is covered by the determined traversal coverage of the watercraft in an instance in which the watercraft traverses the determined route.

In some embodiments, the traversal coverage is based on a sonar beam footprint of a sonar transducer of the watercraft. The sonar beam footprint corresponds to a projection of a beam shape of one or more sonar beams of the sonar transducer at a determined depth. In some embodiments, the determined depth corresponds to the bottom surface of the body of water.

In some embodiments, the computer program code is further configured to cause, on the display, presentation of a representation of the determined traversal coverage on the chart relative to a current position of the watercraft.

In some embodiments, the computer program code is further configured to cause, on the display, presentation of a trail indicating historical positions of the watercraft along the determined route. In some embodiments, the trail includes a representation of the determined traversal coverage so as to indicate which part of the determined portion has been covered by the determined route.

In some embodiments, the determined traversal coverage is a selected width.

In some embodiments, the determined traversal coverage is based on at least one of a width of the watercraft, a width corresponding to a fishing cast distance, or a width corresponding to a towed fishing line.

In some embodiments, the determined route is configured to minimize the number of turns by the watercraft.

In some embodiments, the determined route includes maneuvering outside of the determined portion so as to minimize turns by the watercraft.

In some embodiments, the determined route does not include turns that are greater than 75°.

In some embodiments, the computer program code is further configured to cause an autopilot to cause the watercraft to traverse the determined route.

In some embodiments, data corresponding to the at least one condition parameter is gathered from at least one of a global positioning system (GPS), satellite data, navigation data, prior track data, or server data.

In some embodiments, the at least one condition parameter includes a range of estimated or determined water temperatures within a range of water depths.

In some embodiments, the computer program code is further configured to calculate a time of traverse. The time of traverse is based on a speed of the watercraft and the determined route to traverse the determined portion. In some embodiments, the computer program code is further configured to cause, on the display, an indication of the time of traverse.

In some embodiments, the route is further determined by a determined desired speed of traversal of the watercraft.

In some embodiments, the determined portion of the body of water includes a plurality of distinct portions of the body of water. The plurality of distinct portions of the body of water include a first distinct portion of the body of water, and a second distinct portion of the body of water. The first distinct portion of the body of water is separated from the second distinct portion of the body of water by a third portion of the body of water that does not satisfy the at least one condition parameter. The determined route traverses between the first distinct portion of the body of water and the second distinct portion of the body of water so as to traverse the entirety of the determined plurality of the distinct portions of the body of water.

In some embodiments, the computer program code is further configured to cause, on the display an indication of the determined route.

In some embodiments, the computer program code is further configured to determine an adjusted portion of the body of water. The adjusted portion of the water is defined by, in comparison to the determined portion, at least one of a different range of the at least one condition parameter or the at least one condition parameter and an additional parameter. The computer program code is further configured to cause, on the display, presentation of an indication of the adjusted portion.

In another example embodiment a method for presenting marine data is provided. The method comprises causing, on a display, a presentation of a chart including at least a portion of a body of water. The method includes receiving user input indicating at least one condition parameter associated with a desired marine environment within the body of water. The method includes determining, via a processor, a portion of the body of water that is defined by the at least one condition parameter and causing, on the display, presentation of an indication of the determined portion on the chart. The presentation of the indication of the determined portion includes highlighting a portion of the body of water representing the determined portion. The method includes determining, via the processor, a traversal coverage corresponding to a watercraft, and further determining, via the processor, a route based on the determined traversal coverage, to traverse the determined portion, such that an entirety of the determined portion is covered by the determined traversal coverage of the watercraft in an instance in which the watercraft traverses the determined route.

In yet another example embodiment, a non-transitory computer-readable medium having stored thereon a plurality of computer-executable instructions, which, when executed by a processor, cause the processor to cause, on a display, presentation of a chart including at least a portion of a body of water. The instructions further cause the processor to determine at least one condition parameter associated with a desired marine environment within the body of water, and determine a portion of the body of water that is defined by the at least one condition parameter. The instructions further cause the processor to cause, on the display, presentation of an indication of the determined portion on the chart. The presentation of the indication of the determined portion includes highlighting a portion of the body of water on the chart representing the determined portion. Finally, the instructions further cause the processor to determine, a traversal coverage corresponding to a watercraft, and determine a route, based on the determined traversal coverage, to traverse the determined portion such that an entirety of the determined portion is covered by the determined traversal coverage of the watercraft in an instance in which the watercraft traverses the determined route.

### BRIEF DESCRIPTION OF THE DRAWINGS

Having thus described the invention in general terms, reference will now be made to the accompanying drawings, which are not necessarily drawn to scale, and wherein:
FIG. 1 illustrates an example watercraft including various marine devices, in accordance with some embodiments discussed herein;
FIG. 2 illustrates an example display presenting a chart, in accordance with some embodiments discussed herein;
FIG. 3A illustrates the example display presenting the chart, with an example input screen for enabling a user to input a minimum condition parameter, in accordance with some embodiments discussed herein;
FIG. 3B illustrates the example display presenting the chart, with an example input screen for enabling the user to input a maximum condition parameter, in accordance with some embodiments discussed herein;
FIG. 4A illustrates the example display presenting the chart, with an example highlighted determined portion, where the determined portion is defined by the condition parameter(s), in accordance with some embodiments discussed herein;
FIG. 4B illustrates the example display presenting the chart, wherein an example suggested portion of the body of water is highlighted, wherein the suggested portion is defined by an example suggested condition parameter, in accordance with some embodiments discussed herein;
FIG. 4C illustrates the example display presenting the chart, wherein another example suggested portion of the body of water is highlighted, wherein the suggested portion is defined by another example suggested condition parameter, in accordance with some embodiments discussed herein;
FIG. 5 illustrates the example display presenting the chart, wherein a user-selected portion of the body of water is highlighted, in accordance with some embodiments discussed herein;
FIG. 6A illustrates the example display presenting the chart, wherein an example route to traverse the determined portion of the body of water is presented, in accordance with some embodiments described herein;
FIG. 6B illustrates the example display presenting the chart, wherein another example route to traverse the determined portion of the body of water is presented, in accordance with some embodiments described herein;
FIG. 7 illustrates the example display presenting the chart, wherein an example trail of traversal coverage at historical positions of the watercraft is presented, in accordance with some embodiments discussed herein;
FIG. 8 illustrates the example display presenting the chart, wherein an example route to traverse two distinct portions of the body of water which include the condition parameter(s) is presented, in accordance with some embodiments discussed herein;
FIG. 9 illustrates a block diagram of an example system with various electronic devices, marine devices, and secondary devices shown, in accordance with some embodiments discussed herein; and
FIG. 10-13 illustrate flowcharts of example methods for determining a navigation route for traversing a determined portion of a body of water, in accordance with some embodiments discussed herein.

### DETAILED DESCRIPTION

Example embodiments of the present invention now will be described more fully hereinafter with reference to the accompanying drawings, in which some, but not all embodiments of the invention are shown. Indeed, the invention may be embodied in many different forms and should not be construed as limited to the example embodiments set forth herein; rather, these embodiments are provided so that this disclosure will satisfy applicable legal requirements. Like reference numerals refer to like elements throughout.

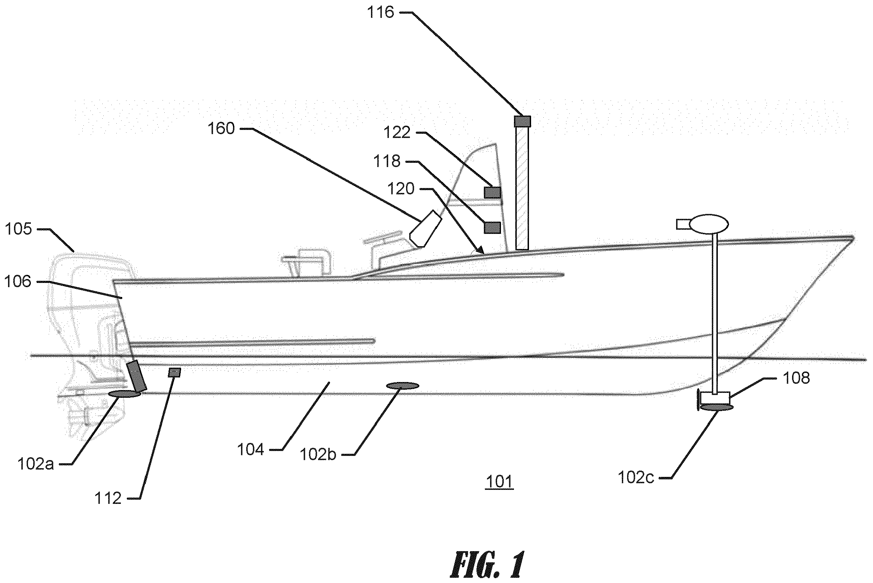

FIG. 1 illustrates an example watercraft 100 including various marine devices, in accordance with some embodiments discussed herein. As depicted in FIG. 1, the watercraft 100 is configured to traverse a marine environment, e.g. body of water 101, and may use one or more sonar transducer assemblies 102a, 102b, and 102c disposed on and/or proximate to the watercraft. Notably, example watercraft contemplated herein may be surface watercraft, submersible watercraft, or any other implementation known to those skilled in the art. The transducer assemblies 102a, 102b, and 102c may each include one or more transducer elements configured to transmit sound waves into a body of water, receive sonar returns from the body of water, and convert the sonar returns into sonar return data. Various types of sonar transducers may be provided - for example, a linear downscan sonar transducer, a conical downscan sonar transducer, a sonar transducer array, an assembly with multiple transducer arrays, or a sidescan sonar transducer may be used.

Depending on the configuration, the watercraft 100 may include a primary motor 105, which may be a main propulsion motor such as an outboard or inboard motor. Additionally, the watercraft 100 may include a trolling motor 108 configured to propel the watercraft 100 or maintain a position. The one or more transducer assemblies (e.g., 102a, 102b, and/or 102c) may be mounted in various positions and to various portions of the watercraft 100 and/or equipment associated with the watercraft 100. For example, the transducer assembly may be mounted to the transom 106 of the watercraft 100, such as depicted by transducer assembly 102a. The transducer assembly may be mounted to the bottom or side of the hull 104 of the watercraft 100, such as depicted by transducer assembly 102b. The transducer assembly may be mounted to the trolling motor 108, such as depicted by transducer assembly 102c.

The watercraft 100 may also include one or more marine electronic devices 160, such as may be utilized by a user to interact with, view, or otherwise control various functionality regarding the watercraft, including, for example, nautical charts and various sonar systems described herein. In the illustrated embodiment, the marine electronic device 160 is positioned proximate the helm (e.g., steering wheel) of the watercraft 100 - although other places on the watercraft 100 are contemplated. Likewise, additionally or alternatively, a remote device (such as a user's mobile device) may include functionality of a marine electronic device.

The watercraft 100 may also comprise other components within the one or more marine electronic devices 160 or at the helm. In FIG. 1, the watercraft 100 comprises a radar 116, which is mounted at an elevated position (although other positions relative to the watercraft are also contemplated). The watercraft 100 also comprises an AIS transceiver 118, a direction sensor 120, and a camera 122, and these components are each positioned at or near the helm (although other positions relative to the watercraft are also contemplated). In other embodiments, these components may be integrated into the one or more electronic devices 160 or other devices. Another example device on the watercraft 100 includes a temperature sensor 112 that may be positioned so that it will rest within or outside of the body of water 101. Other example devices include a wind sensor, one or more speakers, and various watercraft devices/features (e.g., doors, bilge pump, fuel tank, etc.), a towed fishing line or other attachments, among other things. Additionally, one or more sensors may be associated with marine devices; for example, a sensor may be provided to detect the position of the primary motor 105, the trolling motor 108, etc.

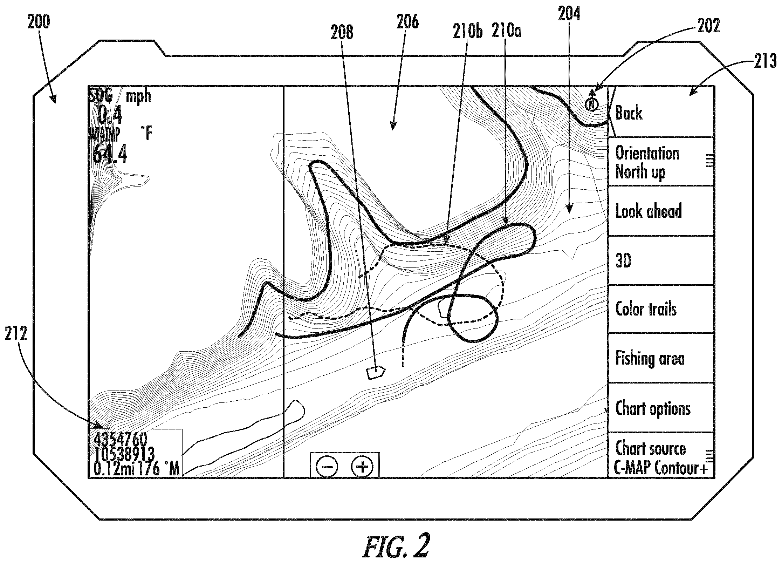

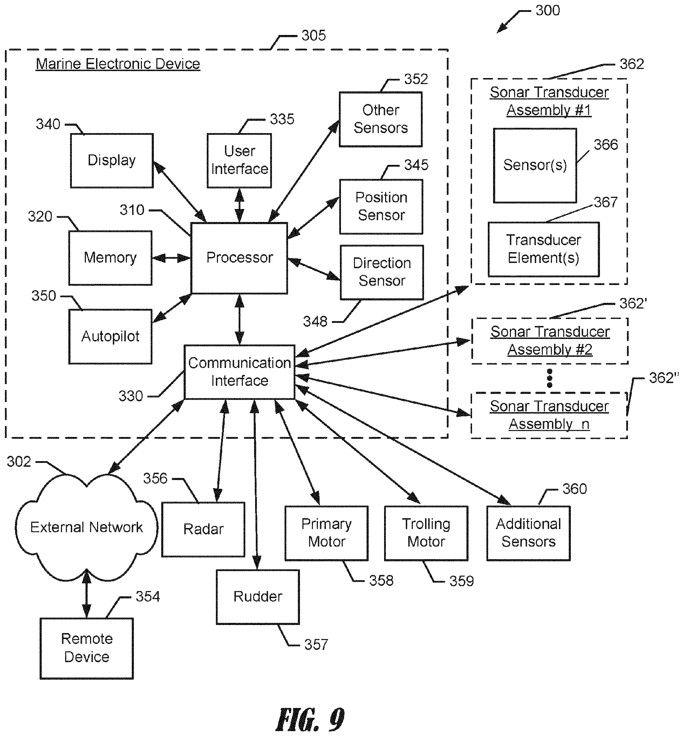

FIG. 2 illustrates an example display 200, such as on a marine electronic device (e.g., 160 in FIG. 1, or the display 340 of the marine electronic device 305 shown in FIG. 9) presenting a chart 202. The chart 202 may present a body of water 204, and distinguish the water 204, from land 206. The chart 202 may include a representation of a watercraft 208 at a current location within the chart 202 (e.g., such may be determined based on position data). As illustrated, watercraft 208 may have a relative size, such as may correspond to the zoom level of the chart 202, and a direction that may indicate in which direction the watercraft 208 is pointing (e.g., may be based on orientation data or recent/current position data). The chart 202 may further include depth readings, such as may be pre-stored and/or may be updated based on various incoming data (e.g., tidal data, sonar data, satellite data, etc.). In some embodiments, the chart 202 may be stored in memory and/or gathered via an external or internal network. The position and/or orientation of the watercraft 208 may be determined by position and/or orientation data, such as from a global positioning system (GPS), and/other sources.

In some embodiments, the chart may present prior tracks from either the watercraft or other watercrafts. The prior tracks may be presented on the chart and may also be used to collect data about the depth, water temperature, sonar imagery, wind, tides, other weather related data, and other data of the marine environment associated with the prior tracks. FIG. 2 illustrates two tracks, 210a and 210b, wherein each of the tracks 210a and 210b represent a different route and contain data about the marine environment traversed along the route.

In some embodiments, the chart may include data associated with the current location of the watercraft, including a current position, depth reading, current speed, transducer bearings, headings, and/or other associated data. The chart may further include a selection screen 213 for implementing various functionality, such as toggling between charts, creating new tracks, indicated desired determined areas, among many other things. The display may be further configured to present, and/or cease presenting various data, as described above, from the chart. Further, the system may be configured to zoom in and zoom out on various points of the chart, and adjust the relative size of the watercraft, tracks, and other presented data accordingly.

The chart 202 includes position data 212 of the watercraft 208 in the form of coordinates. The chart 202 includes a selection screen 213 to toggle between views of the chart, adjust and change the presentation of the tracks 210a, 210b, and other chart options.

In some embodiments, the system is configured to receive condition parameter inputs to define a portion of the body of water a user would like to view and/or navigate within. The chart may include a condition parameter tab on a side of the chart wherein condition parameters may be input. In some embodiments, a single condition parameter is used, while in other embodiments multiple condition parameters may be used. Condition parameters may include water temperature, water depth, water current patterns, air temperatures, and/or other parameters which are readily available through prior tracks, navigation charts, sensors, GPS, satellite, weather services, or other sources of data available on the watercraft. In some embodiments, the system may only use one source of data, while in other embodiments the system may use multiple sources of data. The condition parameters may require a minimum and maximum value to form a range, or they system may have a preprogramed tolerance such that only a desired value is selected. In some embodiments, the user may select a single condition parameter to define the desired conditions of the marine environment, while in other embodiments a user may define multiple condition parameters to define the conditions of the desired marine environment. For example, in some embodiments the system may account for a minimum and a maximum temperature, while in other embodiments the system may additionally account for a minimum and a maximum water depth (e.g., the system looks for where the temperature falls within a certain temperature range and the bottom surface falls within a certain depth range). In some embodiments, the system may determine a minimum and maximum depth, allowing a user to navigate within the desired depths.

In some embodiments, the system may take into account the time, day, season, etc. for determining the portion of the body of water. In some embodiments, the system may just use the current time/day. In some embodiments, system may enable user input to provide the desired time/day for determining the portion of the body of water, such as may be useful for planning ahead.

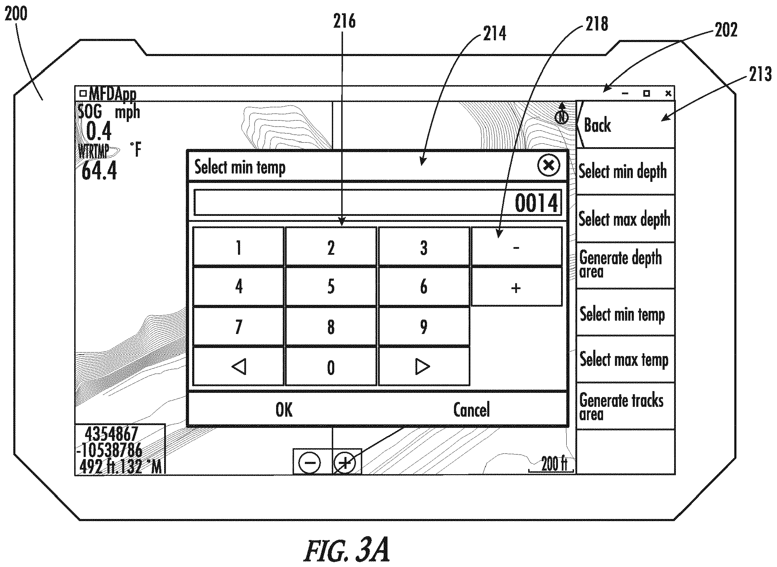

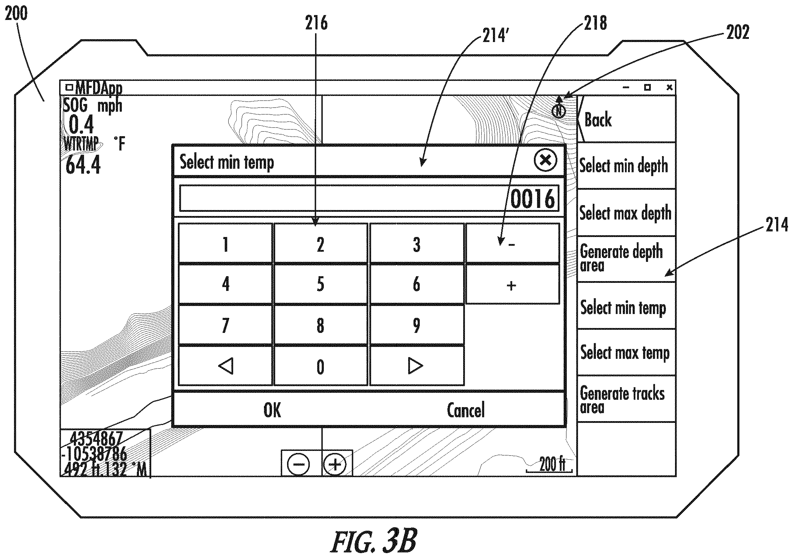

FIG. 3A illustrates the display 200 presenting the chart 202, with an example input screen 214 indicating the condition parameter selected is a minimum temperature. The input screen 214 may be presented after a user selects a corresponding input for generation of an area, such as in the selection screen 213. The input screen 214 presents a keypad 216, and plus and minus keys 218 such that a user may input the parameter directly or adjust the condition parameter incrementally (although other forms of input are contemplated, such as audible commands, remote commands, etc.). FIG. 3B illustrates, a follow up example input screen 214' presented on the display 200 for a condition parameter of a maximum temperature. Once the condition parameter(s) is selected, the system may determine a portion of the body of water 204 defined by the condition parameter(s) of the desired marine environment.

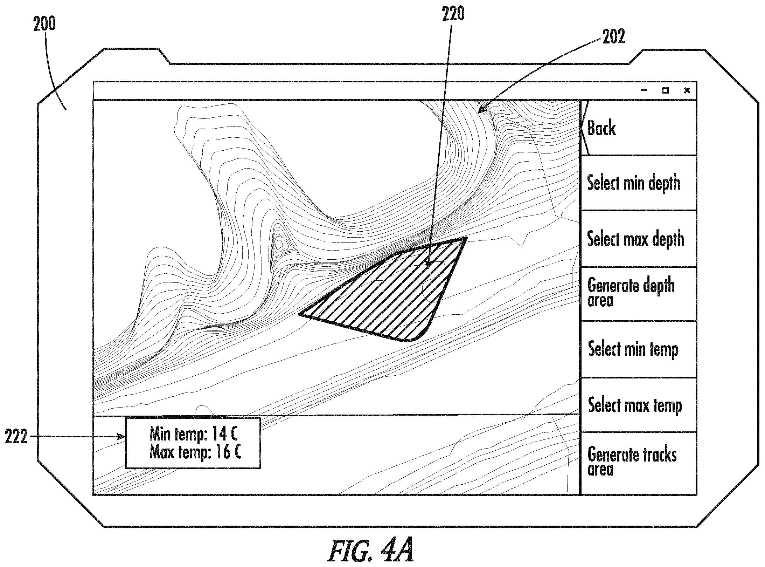

FIG. 4A illustrates the display 200 presenting the chart 202 and displaying the determined portion 220 of the body of water, defined by the condition parameters 222. While the determined portion 220 is shown in highlighted form in FIG. 4A, various embodiments contemplate other visualization options for presentation of the determined portion 220. For example, the determined portion 220 may be presented in one or more colors, one or more patterns, and/or other distinguishing visualization options. Likewise, different levels of transparency may be utilized. In some embodiments the chosen condition parameter(s) 222 may be shown on the chart 202. Although presented in the bottom corner of the chart 202, it should be understood the chosen condition parameter(s) 222 may be presented on any acceptable part of the chart 202, while in some embodiments the chosen condition parameter(s) 222 may not be presented on the chart 202.

In some embodiments, the system may suggest changes to the condition parameters, such as to increase or decrease the size of the determined portion defined by the initial input condition parameters. In some embodiments, the system may determine the original determined portion is too large to navigate. The system may prompt the user for an additional parameter, or the system may suggest an additional parameter. In other embodiments, the system may determine that the original determined portion is too constrained, and the system may suggest a revised condition parameter(s) to enlarge the determined portion, while in other embodiments the system may prompt the user to revise or remove a condition parameter(s). In some embodiments, the system may display the adjusted portion in a different highlight than the original determined portion as to distinguish between the marine environment having the original condition parameter(s), and the marine environment having the changed condition parameter(s), while in other embodiments the adjusted portion may be shown without the original determined portion.

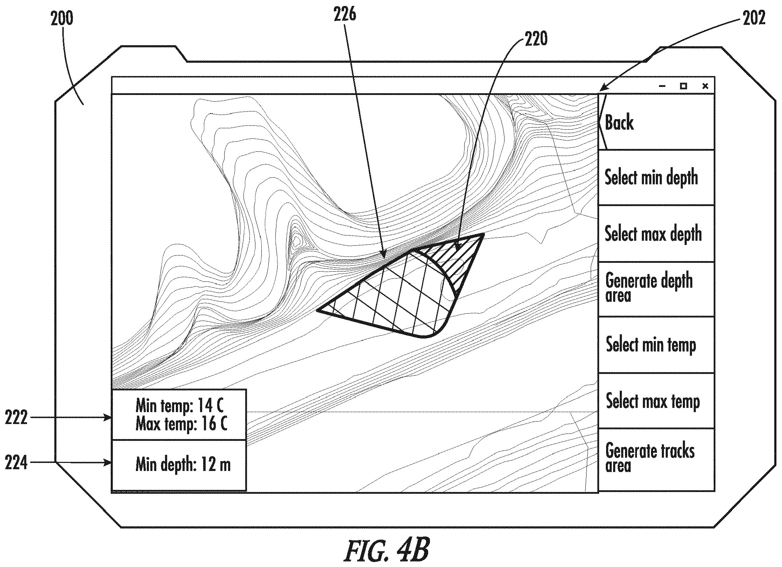

FIG. 4B illustrates an example embodiment wherein the system determines the determined portion 220 may be too large (e.g., too large to navigate, may include hazardous portions, etc.). As illustrated in FIG. 4B, the display 200 presents the chart 202 and the originally determined portion 220 and its corresponding condition parameters 222. Additionally, however, the system may suggest an additional condition parameter 224 (e.g., "Min. depth: 12 m") to suggest that the user add the condition parameter 224 to further define the portion based on having a minimum depth of 12 m. Accordingly, the display 200 includes a smaller adjusted portion 226 to help the user visualize what the smaller portion would look like. The smaller adjusted portion 226 is presented in a highlighted, pattern form to distinguish it from the original determined portion 220, although other distinguishing visualizations are contemplated.

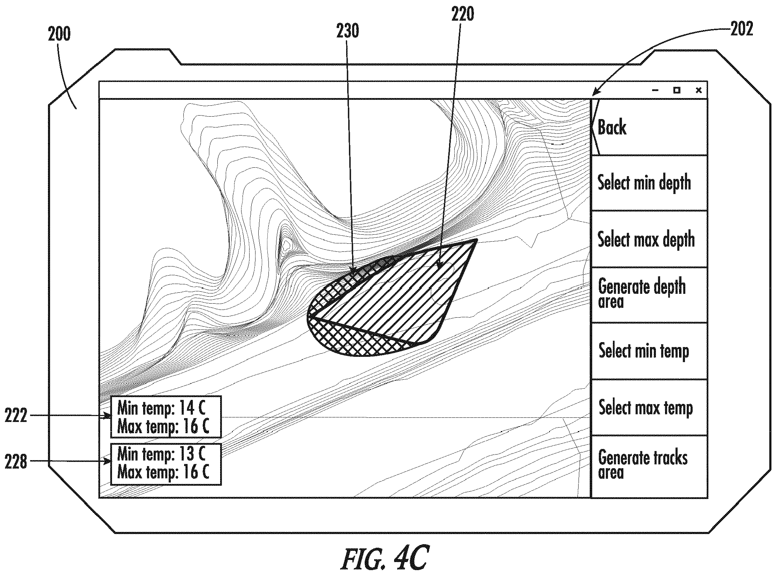

FIG. 4C illustrates an example embodiment wherein the system determines that the determined portion 220 may be too small. FIG. 4C illustrates the display 200 presenting the chart 202 including the determined portion 220 and its corresponding condition parameters 222. In this example, the display suggests an adjustment to the prior inputted condition parameters 228 (e.g., adjust the lower temperature from 14 Celsius to 13 Celsius). Accordingly, the display 200 presents an example adjusted determined portion 230 (additions to the original portion 220 shown in highlighted, pattern form). In some embodiments, the adjusted condition parameters 228 may be predetermined by the system. In some embodiments, the system may prompt the user to change the condition parameters 222.

While the smaller adjusted portion 226 and the larger adjusted portion 230 are shown in patterned form in FIGS. 4B-4C, various embodiments contemplate other visualization options for the presentation of the adjusted portions 226, 230. For example, the adjusted portions 236, 230 may be presented in one or more colors, one or more patterns, and/or other distinguishing visualization options. Likewise, different levels of transparency may be utilized.

In further embodiments, the system may receive multiple condition parameter ranges. The system may determine the portion of the body of water 204 defined by each parameter and display each portion in a different highlight, so as to visually indicate to a user where the condition parameters overlap. A user may then choose a portion on the display which corresponds to the condition parameters defining the desired marine area to be traversed. Once the portion is chosen, the system may present the chosen condition parameters on the display similarly to the embodiments presented in FIGS. 4A-4C.

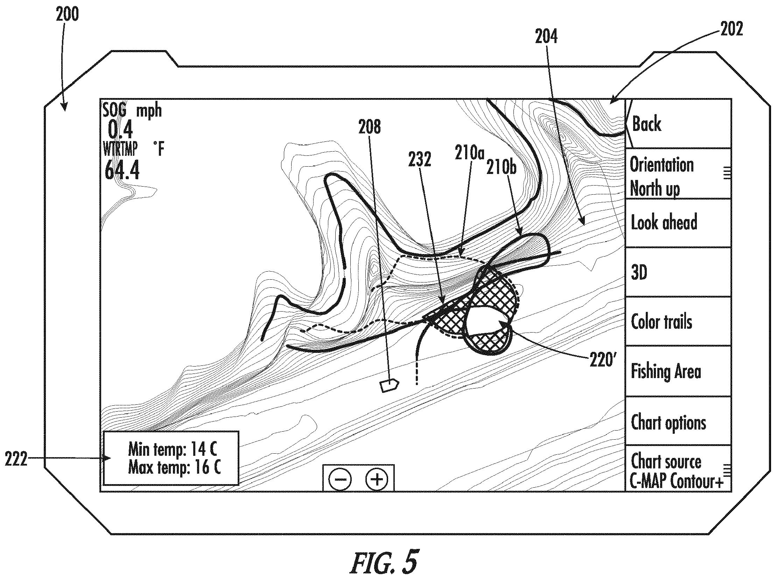

In some embodiments, the system may search the entire body of water 206 for the desired condition parameters, while in other embodiments a user may select a region 232 of the body of water to navigate, such as shown in FIG. 5. In some embodiments, a user may choose a region 232 of the water by drawing a shape, using prior recorded tracks, contour lines or other method of reducing the body of water to search. As shown in FIG. 5 a region 232 has been selected by choosing a portion bounded by two prior tracks 210a and 210b, resulting in a region 232 that is smaller than the body of water 204. Once the region 232 is selected, a user may input condition parameters 222 into the system and result a determined portion 220' of the body of water to navigate.

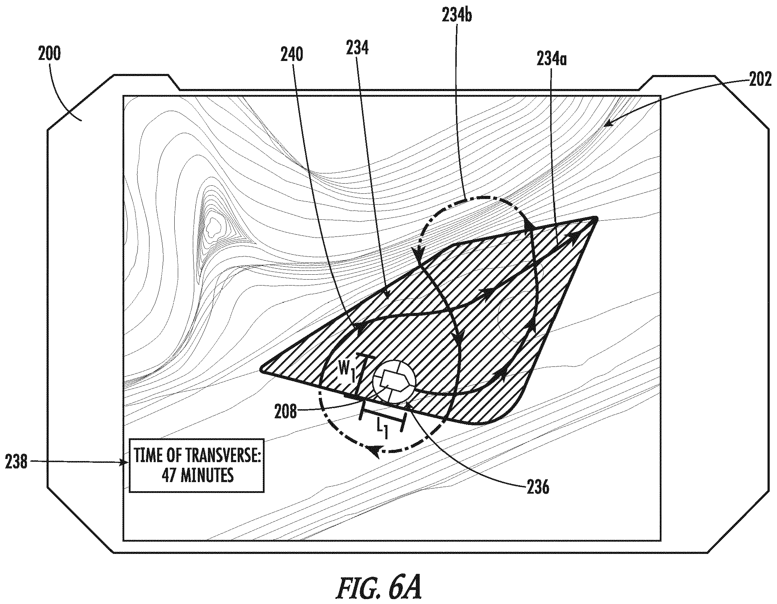

Once the system determines the portion of the body of water which meets the condition parameters, the system may determine a route to traverse the determined portion. FIG. 6A illustrates an embodiment of the present disclosure wherein the system calculates a route 234, such that the watercraft 208 traverses the entirety of the determined portion 220. In some embodiments, the watercraft may be in a location within the determined portion 220, and the system may use the present location of the watercraft as the starting point to determine the traversal route. While in other embodiments, the watercraft may be located outside of the determined portion, in such an embodiment, the system may determine a route to the determined portion (which may be part of the overall determined route).

In some embodiments, the route 234 may be based on a traversal coverage 236 of the watercraft 208. The traversal coverage 236 may have a size and/or shape, such as may be defined by a width W₁ and a length L₁. In some embodiments, the traversal coverage may be determined by the system. For example, the traversal coverage may be based on user inputs and/or determined based on various factors. In this regard, in some embodiments, the traversal coverage may be based on a length and/or width of the watercraft, a distance of a fishing cast, dimensions of one or more towed fishing lines, sonar coverage of sonar transducers of the watercraft, or other features corresponding to the watercraft.

In some embodiments, the traversal coverage 236 may be determined based on the sonar coverage of a sonar transducer throughout the determined portion. In some embodiments, this may correspond to a sonar beam footprint. A sonar beam footprint may be a projection of the sonar beam, of a sonar transducer (e.g. 102a, 102b, & 102c of FIG. 1) onto a bottom surface of the body of water at a current location of watercraft. The sonar beam footprint may account for many factors including, the transducer shape (or shape of the emitting face(s) of the transducer, the number of transducers, the configuration of how the transducer(s) operate, the direction the transducer(s) are facing relative to the watercraft, the relative location of the transducer(s) on the watercraft, the depth of the bottom surface at the current location, the frequency of operation, etc. In some embodiments, the system may be configured to determine and account for at least some of the various factors to determine and provide an indication to a user of the sonar coverage at the specific location.

In some embodiments, the system may also be configured to determine the sonar beam shape configured to emit from one or more sonar transducers. The beam shape may be predetermined and stored in memory for the system to determine it therefrom. In some embodiments, the system may account for more than one sonar transducer, and the relative position of the mounting of each of the transducer(s) may also be accounted for. Alternatively, in some embodiments, a central mounting on the watercraft may be assumed.

The sonar beam footprint may correspond to a flat projection of the beam shape of a sonar transducer onto the bottom surface of the underwater location. Notably, however, the depth to the bottom surface can affect the size of the sonar beam footprint even though the shape of the sonar beam does not change. In this regard, the same sonar beam will cover a greater surface area of the bottom surface when the bottom surface is further away from the transducer (e.g., the bottom surface is at a greater depth).

In some embodiments, the system may determine the sonar beam footprint has a shape with certain dimensions, such as W₁ and L₁ (although any dimensional characteristics may be determined and/or used to describe the determined sonar beam footprint). For example, diameter (or radius) could be determined for the sonar beam footprint.

In some embodiments, the system may determine the sonar beam footprint at a starting location of the watercraft, and set the initial sonar beam footprint as the traversal coverage to determine the route of traverse of the determined portion, while in other embodiments the system may account for a changing sonar beam footprint, or traversal coverage, across the traversal route.

As illustrated in FIG. 6A the representation of the watercraft 208 may have a relative size, such as may correspond to the zoom level of chart 202, and a direction, that may be indicated by the direction that the watercraft 208 is pointing (e.g., such as may be based on orientation data or current/recent position data). Additionally, the depth at the current location may be displayed as an icon corresponding to the representation of the watercraft 208, alternatively, the chart 202 may also include depth readings such as may be pre-stored and/or may be updated based on various incoming data (e.g., tidal data, sonar data, satellite data, etc.).

With the traversal coverage determined, in some embodiments, the system may be configured to provide a visual indication of the traversal coverage to the user. For example, the system may cause presentation of the traversal coverage 236 on the display 200, such as via an overlay on the chart 202 at the current location. The presentation of the traversal coverage 236 may be relative to the representation of the watercraft 208 so as to visually indicate the traversal coverage relative to the watercraft 208 and the determined portion 220. For example, FIG. 6A depicts an example embodiment with the traversal coverage 236 in the shape of a circle with a width W₁ and a length L₁ presented with the representation of the watercraft 208 within the determined portion 220 at the current location. Accordingly, a user can quickly visualize the traversal coverage 236 at the current location.

While the traversal coverage 236 is shown in highlighted form in FIG. 6A, various embodiments contemplate other visualization options for the presentation of the traversal coverage. For example, the traversal coverage may be presented in one or more colors, one or more patterns, and/or other distinguishing visualization options. Likewise, different levels of transparency may be utilized.

In some embodiments, the system may determine a route 234 utilizing the determined portion and the traversal coverage. In some embodiments, the system may account for additional parameters. In some embodiments, the system may account for characteristics of the watercraft 208 when determining the route 234. For example, the system may consider a turn radius of the watercraft (e.g., 15 ft., etc.), the number and type(s) of motors associated with the watercraft, a desired speed of traverse, and/or other similar characteristics. For example, in some embodiments the system may determine the route such that the watercraft does not make a turn which is greater than a threshold angle, such as 75 degrees. In some embodiments, the system may be configured to receive additional user data on route preferences. For example, the system may minimize the number of turns on the route, allow for traverse outside of the determined portion, allow traverse only within the determined portion, allow for backtracking, minimize the time of traverse, determine a traversal speed and/or other similar factors.

In some embodiments, the system may determine that the watercraft 208 includes multiple motors (e.g., a trolling motor (e.g., 108 in FIG. 1) and a primary motor (e.g., 105 in FIG. 1)). The system may be configured to use different motors during different parts of the determined route. For example, returning to FIG. 6A the system may be configured to use a trolling motor, so as to traverse at a slower speed along a portion of the route (e.g., along a portion of the route 234a within the determined portion), while the system may utilize a main motor, so as to traverse at a higher speed along a portion of the route (e.g., a portion of the route 234b outside of the determined portion). Although two motors are referred to in this example embodiment, other motor configurations are considered to allow the watercraft to traverse at different speeds along different portions of the route 234.

The system may be configured to determine a time of traverse 238 for the determined route 234 and may, in some embodiments, be configured to cause presentation of the calculated time of traverse 238 on the chart 202. The time of traverse 238 may be based on the determined route 234, and the determined speed(s) of traverse. In some embodiments, the system may determine the route such that the time of traverse is minimized.

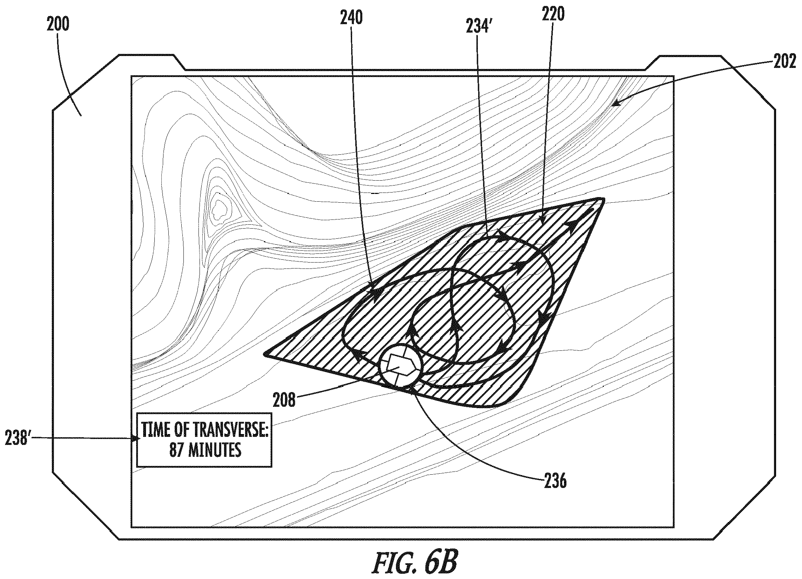

Returning to FIG. 6A in some embodiments, the system may be configured to display the route 234 on the chart 202 as an overlay of the determined portion 220. In some embodiments, the presentation of the route 234 may include direction indicators 240 to indicate to the user the direction of traverse of the watercraft 208 though the determined portion 220. In some embodiments, a portion of the route 234a within the determined portion may be presented in a different color as a portion of the route 234b outside of the determined portion, while in other embodiments the route 234 (including the route within the determined portion 234a and the route outside of the determined portion 234b) may be presented in a single color. Although a color is indicated in this embodiment, other identifying presentations, including highlights, line patterns, transparencies, etc. may be used to identify the route or portions thereof. FIG. 6B illustrates another example route 234' for traversing the determined portion 220. The example route 234' includes a time of traverse of 87 minutes (shown at 238').

In some embodiments, the traversal coverage 236 is presented in relation to the watercraft 208 at a starting point of the route 236 such as to provide the user with a visualization of the traversal coverage 236. In other embodiments the traversal coverage 236 is not presented on the chart 202, and only the route 234 in relation to the determined portion 220 is presented.

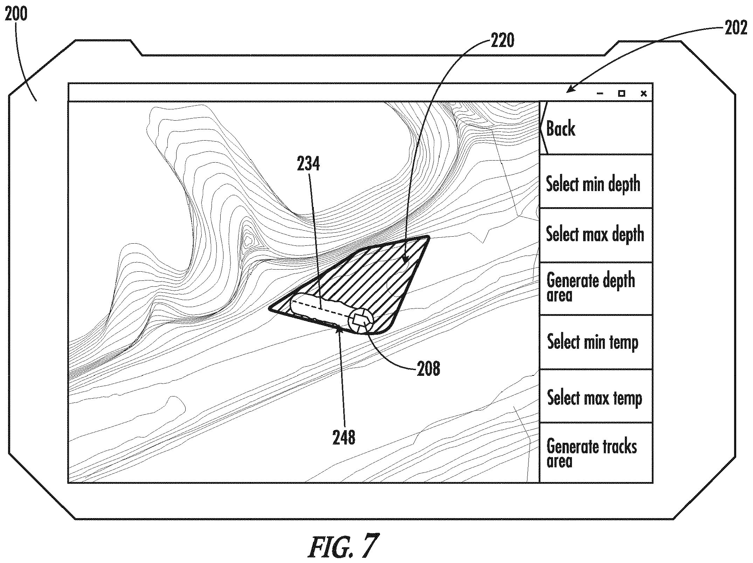

In some embodiments, with reference to FIG. 7, the traversal coverage 236 may be presented on the chart 202 as the watercraft 208 progresses along the route 234 so as to visually indicate to a user the portion of the determined portion 220 covered by the watercraft 208. In this regard, in some embodiments, the system may be configured to present a trail of the traversal coverage as the watercraft travels. In this regard, a user can easily visualize which parts of the body of water have been covered by the route, and which parts have not been covered. FIG. 7 illustrates an example traversal coverage trail 248. The traversal coverage trail 248 may include a presentation of the route 234 traveled from the starting location to the present location of the watercraft 208.

The system may also be configured to receive a user input to mark a point of the route 234, such as within the traversal coverage trail 248. The user input may mark a point of interest including a fish, a school of fish, a structure or similar.

In some embodiments, a user may determine based on the presented route 234, and/or the time of traversal 238, that the route parameters, and/or the condition parameters 222 require an adjustment. A user may adjust the determined portion 220, by changing the condition parameters, or manually adjusting the determined portion 220, and requesting the system to determine a new route. In some embodiments the system may display the new route on the chart, and cease presenting the prior route 234 on the chart 202 while in other embodiments the system may present the new route in an overlaid fashion on the determined route 234.

In some embodiments, the system may engage an autopilot to traverse along the route 234 to cover the entire determined portion 220. In some embodiments the autopilot may be configured to switch between speeds, and/or motors as required by the route, or as requested by the user.

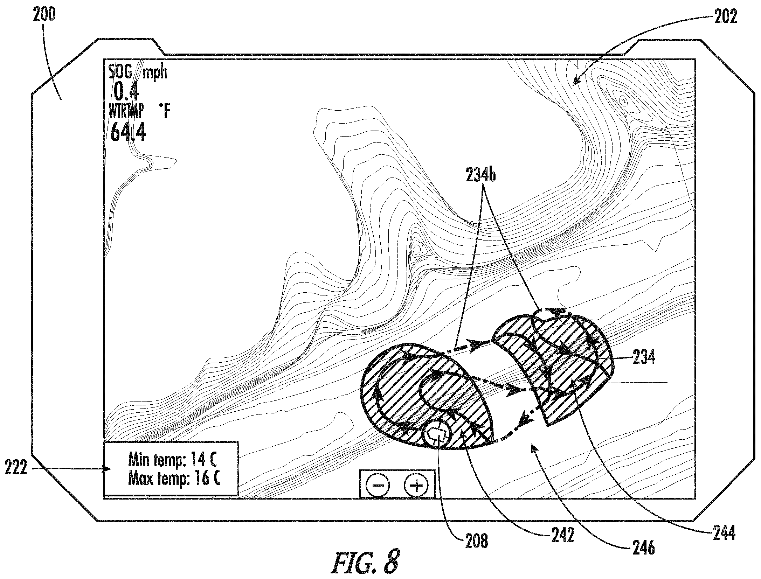

In some embodiments, the system may determine more than one distinct portion of the body of water defined by the input condition parameter(s). Referring now to FIG. 8, the system may determine a first distinct portion 242, and a second distinct portion 244, both defined by the desired condition parameter(s) 222, and separated by a third portion of the body of water 246 that is not defined by the desired condition parameter(s) 222. In some embodiments, the system may determine a route within the first distinct portion, and then a second route within the second distinct portion, while in other embodiments, as shown in FIG. 8, the system may determine a route 234 which traverses between the first distinct portion 242 and the second distinct portion 244 by traversing the third portion 246.

The system may be configured such that the autopilot is engaged when traversing the first distinct portion 242, the second distinct portion 244, and the third portion 246. In some embodiments, the system may be configured to traverse at a first speed while traversing the first and second distinct portions 242, 244, and traverse at a second speed when traversing within the third portion, or along parts of the route located outside of the first or second distinct portion. In some embodiments, the first speed is slower than the second speed. In some embodiments the first and second distinct portions are traversed using a trolling motor, while the third portion may be traversed using a primary motor or by increasing the speed of the trolling motor. In some embodiments, the system may display one or more condition parameter(s) corresponding to the third portion on the screen and prompt the user to determine if the third portion should be included in the determined portion as to combine the first distinct portion, the second distinct portion and the third portion into a single determined portion to be traversed in the entirety.

Although FIG. 8 shows a first and a second distinct portion, there may be any number of distinct portions which meet the specified condition parameter(s). In an example embodiment where there are multiple distinct portions, the system may prompt for and/or utilize a user input the includes an additional condition parameter(s), reduces the range of the given condition parameter(s), defines a region to search, and/or selects one or more of the distinct portions to include within the route.

### Example System Architecture

FIG. 9 illustrates a block diagram of an example system 300 according to various embodiments of the present invention described herein. The illustrated system 300 includes a marine electronic device 305. The system 300 may comprise numerous marine devices. As shown in FIG. 9, one or more sonar transducer assemblies 362 may be provided. A radar 356, a rudder 357, a primary motor 358, a trolling motor 359, and additional sensors/devices 360 may also be provided as marine devices, but other marine devices may be provided as well. One or more marine devices may be implemented on the marine electronic device 305. For example, a position sensor 345, a direction sensor 348, an autopilot 350, and other sensors 352 may be provided within the marine electronic device 305. These marine devices can be integrated within the marine electronic device 305, integrated on a watercraft at another location and connected to the marine electronic device 305, and/or the marine devices may be implemented at a remote device 354 in some embodiments. The system 300 may include any number of different systems, modules, or components; each of which may comprise any device or means embodied in either hardware, software, or a combination of hardware and software configured to perform one or more corresponding functions described herein.

The marine electronic device 305 may include at least one processor 310, a memory 320, a communication interface 330, a user interface 335, a display 340, autopilot 350, and one or more sensors (e.g. position sensor 345, direction sensor 348, other sensors 352). One or more of the components of the marine electronic device 305 may be located within a housing or could be separated into multiple different housings (e.g., be remotely located).

The processor(s) 310 may be any means configured to execute various programmed operations or instructions stored in a memory device (e.g., memory 320) such as a device or circuitry operating in accordance with software or otherwise embodied in hardware or a combination of hardware and software (e.g. a processor operating under software control or the processor embodied as an application specific integrated circuit (ASIC) or field programmable gate array (FPGA) specifically configured to perform the operations described herein, or a combination thereof) thereby configuring the device or circuitry to perform the corresponding functions of the at least one processor 310 as described herein. For example, the at least one processor 310 may be configured to analyze various data, such as for determining a portion of a body of water that satisfies one or more condition parameters.

In some embodiments, the at least one processor 310 may be further configured to implement signal processing. In some embodiments, the at least one processor 310 may be configured to perform enhancement features to improve the display characteristics of data or images, collect or process additional data, such as time, temperature, GPS information, waypoint designations, or others, or may filter extraneous data to better analyze the collected data. The at least one processor 310 may further implement notices and alarms, such as those determined or adjusted by a user, to reflect proximity of other objects (e.g., represented in sonar data), to reflect proximity of other vehicles (e.g. watercraft), approaching storms, etc.

In an example embodiment, the memory 320 may include one or more non-transitory storage or memory devices such as, for example, volatile and/or non-volatile memory that may be either fixed or removable. The memory 320 may be configured to store instructions, computer program code, sonar data, and additional data such as radar data, chart data, location/position data in a non-transitory computer readable medium for use, such as by the at least one processor 310 for enabling the marine electronic device 305 to carry out various functions in accordance with example embodiments of the present invention. For example, the memory 320 could be configured to buffer input data for processing by the at least one processor 310. Additionally or alternatively, the memory 320 could be configured to store instructions for execution by the at least one processor 310.

The communication interface 330 may be configured to enable communication to external systems (e.g. an external network 302). In this manner, the marine electronic device 305 may retrieve stored data from a remote device 354 via the external network 302 in addition to or as an alternative to the onboard memory 320. Additionally or alternatively, the marine electronic device 305 may transmit or receive data, such as sonar signal data, sonar return data, sonar image data, or the like to or from a sonar transducer assembly 362. In some embodiments, the marine electronic device 305 may also be configured to communicate with other devices or systems (such as through the external network 302 or through other communication networks, such as described herein). For example, the marine electronic device 305 may communicate with a propulsion system of the watercraft 100 (e.g., for autopilot control); a remote device (e.g., a user's mobile device, a handheld remote, etc.); or another system. Using the external network 302, the marine electronic device may communicate with and send and receive data with external sources such as a cloud, server, etc. The marine electronic device may send and receive various types of data. For example, the system may receive weather data, data from other fish locator applications, alert data, among others. However, this data is not required to be communicated using external network 302, and the data may instead be communicated using other approaches, such as through a physical or wireless connection via the communications interface 330.

The communications interface 330 of the marine electronic device 305 may also include one or more communications modules configured to communicate with one another in any of a number of different manners including, for example, via a network. In this regard, the communications interface 330 may include any of a number of different communication backbones or frameworks including, for example, Ethernet, the NMEA 2000 framework, GPS, cellular, Wi-Fi, or other suitable networks. The network may also support other data sources, including GPS, autopilot, engine data, compass, radar, etc. In this regard, numerous other peripheral devices (including other marine electronic devices or sonar transducer assemblies) may be included in the system 300.

The position sensor 345 may be configured to determine the current position and/or location of the marine electronic device 305 (and/or the watercraft 100). For example, the position sensor 345 may comprise a GPS, bottom contour, inertial navigation system, such as machined electromagnetic sensor (MEMS), a ring laser gyroscope, or other location detection system. Alternatively or in addition to determining the location of the marine electronic device 305 or the watercraft 100, the position sensor 345 may also be configured to determine the position and/or orientation of an object outside of the watercraft 100.

The display 340 (e.g. one or more screens) may be configured to present images and may include or otherwise be in communication with a user interface 335 configured to receive input from a user. The display 340 may be, for example, a conventional LCD (liquid crystal display), a touch screen display, mobile device, or any other suitable display known in the art upon which images may be displayed.

In some embodiments, the display 340 may present one or more sets of data (or images generated from the one or more sets of data). Such data includes chart data, radar data, sonar data, weather data, location data, position data, orientation data, sonar data, or any other type of information relevant to the watercraft. Sonar data may be received from one or more sonar transducer assemblies 362 or from sonar devices positioned at other locations, such as remote from the watercraft. Additional data may be received from marine devices such as a radar 356, a primary motor 358 or an associated sensor, a trolling motor 359 or an associated sensor, an autopilot, a rudder 357 or an associated sensor, a position sensor 345, a direction sensor 348, other sensors 352, a remote device 354, onboard memory 320 (e.g., stored chart data, historical data, etc.), or other devices.

In some further embodiments, various sets of data, referred to above, may be superimposed or overlaid onto one another. For example, a route may be applied to (or overlaid onto) a chart (e.g. a map or navigational chart). Additionally or alternatively, depth information, weather information, radar information, sonar information, or any other navigation system inputs may be applied to one another.

The user interface 335 may include, for example, a keyboard, keypad, function keys, mouse, scrolling device, input/output ports, touch screen, or any other mechanism by which a user may interface with the system.

Although the display 340 of FIG. 9 is shown as being directly connected to the at least one processor 310 and within the marine electronic device 305, the display 340 could alternatively be remote from the at least one processor 310 and/or marine electronic device 305. Likewise, in some embodiments, the position sensor 345 and/or user interface 335 could be remote from the marine electronic device 305.

The marine electronic device 305 may include one or more other sensors/devices 352, such as configured to measure or sense various other conditions. The other sensors/devices 352 may include, for example, an air temperature sensor, a water temperature sensor, a current sensor, a light sensor, a wind sensor, a speed sensor, or the like.

The sonar transducer assemblies 362 illustrated in FIG. 9 may include one or more sonar transducer elements 367, such as may be arranged to operate alone or in one or more transducer arrays. In some embodiments, additional separate sonar transducer elements (arranged to operate alone, in an array, or otherwise) may be included. As indicated herein, the sonar transducer assemblies 362 may also include a sonar signal processor or other processor (although not shown) configured to perform various sonar processing. In some embodiments, the processor (e.g., at least one processor 310 in the marine electronic device 305, a controller (or processor portion) in the sonar transducer assemblies 362, or a remote controller - or combinations thereof) may be configured to filter sonar return data and/or selectively control transducer element(s) 367. For example, various processing devices (e.g., a multiplexer, a spectrum analyzer, A-to-D converter, etc.) may be utilized in controlling or filtering sonar return data and/or transmission of sonar signals from the transducer element(s) 367.

The sonar transducer assemblies 362 may also include one or more other systems, such as various sensor(s) 366. For example, the sonar transducer assembly 362 may include an orientation sensor, such as gyroscope or other orientation sensor (e.g., accelerometer, MEMS, etc.) that can be configured to determine the relative orientation of the sonar transducer assembly 362 and/or the one or more sonar transducer element(s) 367 - such as with respect to a forward direction of the watercraft. In some embodiments, additionally or alternatively, other types of sensor(s) are contemplated, such as, for example, a water temperature sensor, a current sensor, a light sensor, a wind sensor, a speed sensor, or the like.

The components presented in FIG. 9 may be rearranged to alter the connections between components. For example, in some embodiments, a marine device outside of the marine electronic device 305, such as the radar 356, may be directly connected to the at least one processor 310 rather than being connected to the communication interface 330. Additionally, sensors and devices implemented within the marine electronic device 305 may be directly connected to the communications interface in some embodiments rather than being directly connected to the at least one processor 310.

### Example Flowchart(s) and Operations

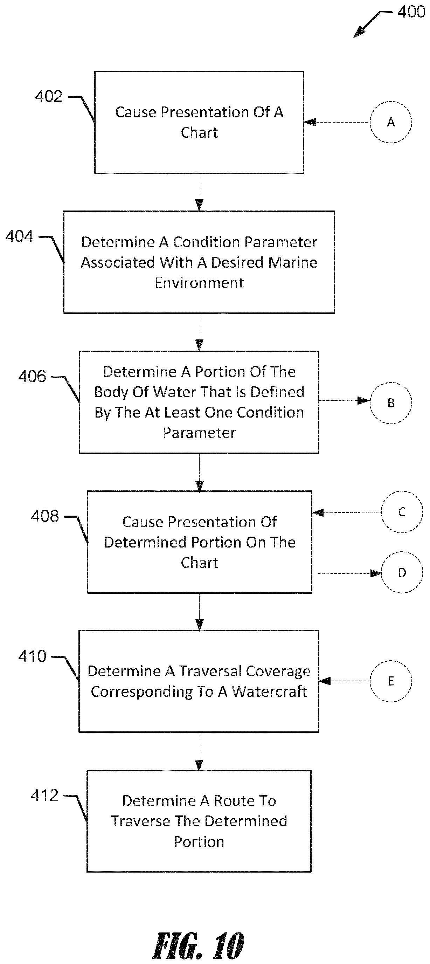

Some embodiments of the present invention provide methods, apparatus, and computer program products related to the presentation of information according to various embodiments described herein. Various examples of the operations performed in accordance with embodiments of the present invention will now be provided with reference to FIGs. 10-13. FIGs. 10-13 present a flowchart with example method(s) of determination of a marine environment area and corresponding navigation thereof. These methods may be performed by a wide variety of components, including, but not limited to, one or more processors, one or more microprocessors, and one or more controllers. In some embodiments, a marine electronic device 305 (FIG. 9) may comprise one or more processors that perform the functions shown in FIGs. 10-13. Further, these methods may be provided on a piece of software which runs on a central server that is at a remote location away from the watercraft, and the remote server may communicate with a processor or a similar component on the watercraft. Additionally, the methods could be integrated into a software update that may be installed onto existing hardware, or the methods may be integrated into the initial software or hardware provided in a radar unit, watercraft, server, etc.

FIGs. 10-13 illustrate a flowchart of an example method 400 for determination of a marine environment area and corresponding navigation thereof, in accordance with some embodiments discussed herein. The operations illustrated in and described with respect to FIGs. 10-13 may, for example, by performed by, with the assistance of, and/or, under the control of one or more of the processor 310, memory 320, communication interface 330, user interface 335, position sensor 345, direction sensor 348, other sensor 352, autopilot 350, transducer assembly 362, 362', 362", display 340, radar 356, rudder 357, primary motor 358, trolling motor 359, additional sensors 360, and/or external network 302/remote device 354.

At operation 402, the method comprises presentation of a chart, including a body of water. At operation 404, the method comprises determining a condition parameter associated with a desired marine environment. At operation 406, the method comprises determining a portion of the body of water that is defined by the at least one condition parameter. At operation 408, the method comprises causing the presentation of the determined portion on the display of the chart. At operation 410, the method comprises determining a traversal coverage corresponding to a watercraft. At operation 412, the method comprises determining a route to traverse the determined portion, such as based on the traversal coverage.

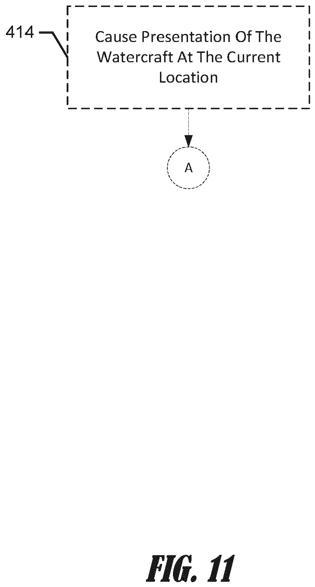

With reference to FIG. 11, at operation 414, the presentation of the chart may include a representation of the watercraft at the current location.

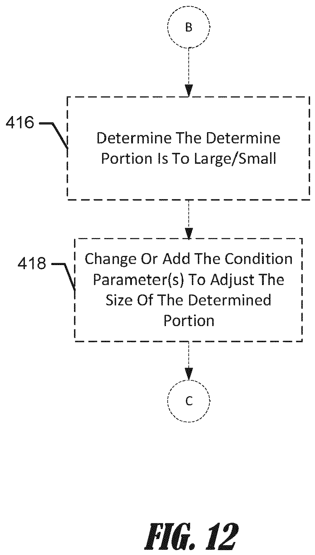

With reference to FIG. 12, after determination of the portion at operation 406, the method may also include determining that the determined portion is too small (or large), at operation 416, and changing and/or adding a condition parameter(s) to adjust the size of the determine portion at operation 418 (such as via a suggestion).

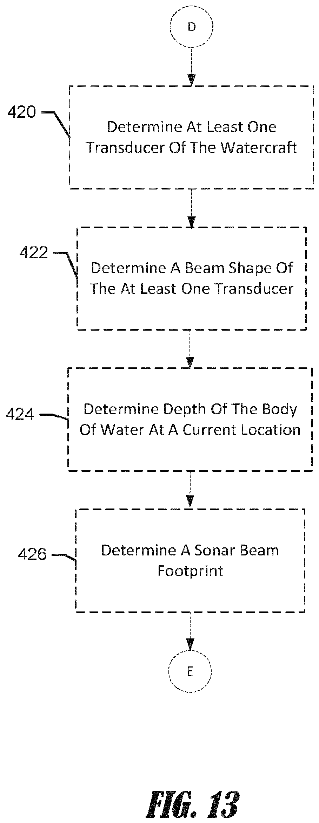

With reference to FIG. 13, after causing presentation of the determined portion at operation 408, the method may include, at operation 420, determining at least one transducer of the watercraft and, at operation 422, determining a beam shape corresponding to the at least one transducer. The method may continue, at operation 424, by determining a depth of the bottom surface of the body of water at a current location of the watercraft and, at operation 426, determining a sonar beam footprint of the sonar transducer (such as may be used in determining the traversal coverage for operation 410).

FIGs. 10-13 illustrates a flowchart of a system, method, and computer program product according to various example embodiments. It will be understood that each block of the flowcharts, and combinations of blocks in the flowcharts, may be implemented by various means, such as hardware and/or a computer program product comprising one or more computer-readable mediums having computer readable program instructions stored thereon. For example, one or more of the procedures described herein may be embodied by computer program instructions of a computer program product. In this regard, the computer program product(s) which embody the procedures described herein may be stored by, for example, the memory 320 and executed by, for example, the processor 310. As will be appreciated, any such computer program product may be loaded onto a computer or other programmable apparatus (for example, a marine electronic device 305) to produce a machine, such that the computer program product including the instructions which execute on the computer or other programmable apparatus creates means for implementing the functions specified in the flowchart block(s). Further, the computer program product may comprise one or more non-transitory computer-readable mediums on which the computer program instructions may be stored such that the one or more computer-readable memories can direct a computer or other programmable device (for example, a marine electronic device 305) to cause a series of operations to be performed on the computer or other programmable apparatus to produce a computer-implemented process such that the instructions which execute on the computer or other programmable apparatus implement the functions specified in the flowchart block(s).

### Conclusion

Many modifications and other embodiments of the inventions set forth herein will come to mind to one skilled in the art to which these inventions pertain having the benefit of the teachings presented in the foregoing descriptions and the associated drawings. Therefore, it is to be understood that the embodiments of the invention are not to be limited to the specific embodiments disclosed and that modifications and other embodiments are intended to be included within the scope of the invention. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the invention. In this regard, for example, different combinations of elements and/or functions than those explicitly described above are also contemplated within the scope of the invention. Although specific terms are employed herein, they are used in a generic and descriptive sense only and not for purposes of limitation.

## Claims

1. A marine data system comprising:
a display;
a processor; and
a memory including computer program code configured, when executed by the processor, to:
cause, on the display, presentation of a chart including at least a portion of a body of water;
receive user input indicating at least one condition parameter associated with a desired marine environment within the body of water;
determine a portion of the body of water that is defined by the at least one condition parameter;
cause, on the display, presentation of an indication of the determined portion of the body of water on the chart, wherein the presentation of the indication of the determined portion includes highlighting a portion of the body of water on the chart representing the determined portion;
determine a traversal coverage corresponding to a watercraft; and
determine a route, based on the determined traversal coverage, to traverse the determined portion such that an entirety of the determined portion is covered by the determined traversal coverage of the watercraft in an instance in which the watercraft traverses the determined route.

2. The marine data system of claim 1, wherein the traversal coverage is based on a sonar beam footprint of a sonar transducer of the watercraft, wherein the sonar beam footprint corresponds to a projection of a beam shape of one or more sonar beams of the sonar transducer at a determined depth, wherein the determined depth corresponds to the bottom surface of the body of water.

3. The marine data system of claim 1 or claim 2, wherein the computer program code is further configured, when executed by the processor, to cause, on the display, presentation of a representation of the determined traversal coverage on the chart relative to a current position of the watercraft.

4. The marine data system of any one of claims 1 to 3, wherein the computer program code is further configured, when executed by the processor, to cause, on the display, presentation of a trail indicating historical positions of the watercraft along the determined route, wherein the trail includes a representation of the determined traversal coverage so as to indicate which part of the determined portion has been covered by the determined route.

5. The marine data system of any one of claims 1 to 4, wherein the determined traversal coverage is a selected width.

6. The marine data system of any one of claims 1 to 4, wherein the determined traversal coverage is based on at least one of a width of the watercraft, a width corresponding to a fishing cast distance, or a width corresponding to a towed fishing line.

7. The marine data system of any one of the preceding claims, wherein the determined route is configured to minimize the number of turns by the watercraft.

8. The marine data system of any one of claims 1 to 6, wherein the determined route includes maneuvering outside of the determined portion so as to minimize turns by the watercraft.

9. The marine data system of any one of the preceding claims, wherein the determined route does not include turns that are greater than 75°.

10. The marine data system of any one of the preceding claims, wherein the computer program code is further configured, when executed by the processor, to cause an autopilot to cause the watercraft to traverse the determined route.

11. The marine data system of any one of the preceding claims, wherein data corresponding to the at least one condition parameter is gathered from at least one of a global positioning system (GPS), satellite data, navigation data, prior track data, or server data.

12. The marine data system of any one of the preceding claims, wherein the at least one condition parameter includes a range of estimated or determined water temperatures within a range of water depths.

13. The marine data system of any one of the preceding claims, wherein the determined portion of the body of water includes a plurality of distinct portions of the body of water, wherein the plurality of distinct portions of the body of water include a first distinct portion of the body of water and a second distinct portion of the body of water, wherein the first distinct portion of the body of water is separated from the second distinct portion of the body of water by a third portion of the body of water that does not satisfy the at least one condition parameter, and wherein the determined route traverses between the first distinct portion of the body of water and the second distinct portion of the body of water so as to traverse the entirety of the determined plurality of the distinct portions of the body of water.

14. The marine data system of claim 13, wherein the determined route, when operated by autopilot, is determined so as to cause the watercraft to traverse the first distinct portion of the body of water and the second distinct portion of the body of water at a first speed, and the third portion of the body of water at a second speed, wherein the first speed is different than the second speed.

15. A method, the method comprising:
causing, on a display, a presentation of a chart including at least a portion of a body of water;
receiving user input indicating at least one condition parameter associated with a desired marine environment within the body of water;
determining, via a processor, a portion of the body of water that is defined by the at least one condition parameter;
causing, on the display, presentation of an indication of the determined portion on the chart, wherein the presentation of the indication of the determined portion includes highlighting a portion of the body of water representing the determined portion;
determining, via the processor, a traversal coverage corresponding to a watercraft; and
determining, via the processor, a route based on the determined traversal coverage, to traverse the determined portion such that an entirety of the determined portion is covered by the determined traversal coverage of the watercraft in an instance in which the watercraft traverses the determined route.
